# EUROPEAN PATENT SPECIFICATION

(11) **EP 3 896 227 B1**
(45) Date of publication and mention of the grant of the patent: **03.09.2025**
(21) Application number: 18943094.5
(22) Date of filing: 13.12.2018
(51) Int. Cl.: E02B 3/26

(54) **FENDER STRUCTURE**
KOTFLÜGELSTRUKTUR
STRUCTURE DE DÉFENSE

(43) Date of publication of application: 20.10.2021
(73) Proprietor: Shibata Industrial Co., Ltd., Akashi-shi, Hyogo 674-0082 (JP)
(72) Inventor: IKEBE, Masamitsu, Akashi-shi, Hyogo 674-0082 (JP); HIROOKA, Soichiro, Akashi-shi, Hyogo 674-0082 (JP)
(74) Representative: Cleveland Scott York
(86) International application number: PCT/JP2018/045855
(87) International publication number: WO 2020/121472

(56) References cited:
- JP-A- 2001 348 840
- JP-A- 2002 362 480
- JP-A- 2005 090 139
- JP-A- S5 681 704
- JP-A- S6 051 211
- JP-U- S60 104 418
- JP-Y1- S 498 315

## Description

### [Technical Field]

The present invention relates to a fender structure, and more particularly, it relates to a fender structure set on a quay or the like and employed when a ship goes alongside the quay or the like.

### [Background Art]

In general, there are proposed various techniques of covering surfaces (bumper surfaces) of bumper portions of fenders with other materials or other members thereby protecting the fenders themselves or preventing ships going alongside quays from fouling.

In Japanese Patent Laying-Open No. 1996-301188, for example, there is disclosed a color fender for a quay integrally constructed by putting a bumper plate made of a colorable material on a solid fender of rubber from an upper portion of a bumper surface of a main body for bringing a fishing port into a bright image and improving safety from dusk till night in aboardage of a ship and at the time of working.

In Japanese Patent Laying-Open No. 2009-150173, there is disclosed a fender characterized in that a bumper member consisting of a plurality of layers having different colors respectively is fixed to the outer surface of a rubber fender. Colors of exposed portions of the bumper member so change by abrasion that the life of the bumper member can be easily recognized.

In Japanese Patent Laying-Open No. 2000-309914, further, there is disclosed a fender provided on a surface of a head portion of a rubber fender coming into contact with a ship with a synthetic resin layer having a smaller coefficient of friction than rubber. This fender prevents deterioration resulting from abrasion and buckling the head portion by avoiding contact between portions made of rubber and a ship.

In Japanese Patent Laying-Open No. 2005-90139, further, there is disclosed a fender cover having a structure, for preventing deterioration of the fender, including a cover made of rubber or synthetic resin covering a surface of a fender formed by an elastic body such as rubber having a hollow buffer portion, a tabular fixing plate having fixing portions, arranged on upper and lower opening portions of the buffer portion, having through-holes on plate surfaces for detachably fixing the cover on upper and lower portions thereof and fixing shafts inserted into the buffer portion and passed through the through-holes for fixing the fixing plate.

### [Prior Art]

### [Patent Document]

[Patent Document 1] Japanese Patent Laying-Open No. 1996-301188
[Patent Document 2] Japanese Patent Laying-Open No. 2009-150173
[Patent Document 3] Japanese Patent Laying-Open No. 2000-309914
[Patent Document 4] Japanese Patent Laying-Open No. 2005-90139 describes a fender cover covering a surface of the fender, formed of an elastic body, a plate-like fixing plate having an inserting hole, and a fixing part for detachably fixing the cover, and a fixing shaft inserted into the inserting hole, for fixing the fixing plate.

In the conventional color fender for a quay such as the aforementioned Patent Document 1, it is necessary to work the fender body into a prescribed shape, in order to fit the fender body and the bumper plate with each other. Therefore, labor for the working is caused while the same has been not easily applicable to an existing fender.

The conventional fender such as the aforementioned Patent Document 2 is fixed with fixing members such as bolts from the side of the bumper member for integrating the rubber fender and the bumper member with each other. Therefore, it has been time-consuming for attaching/detaching the bumper member. Further, it is necessary to embed a steel plate or a synthetic resin plate provided with internal threads in the rubber fender, and the same has not been applicable to an existing fender.

In the conventional fender such as the aforementioned Patent Document 3, further, the synthetic resin layer cannot be separated since the same is integrally formed with the rubber fender portion through a vulcanizing step, and it has been necessary to exchange the fender itself when the synthetic resin layer is broken.

In the conventional fender cover such as the aforementioned Patent Document 4, further, the fender cover is constituted of a plurality of members, and hence it has been time-consuming for attaching/detaching the same. Further, the cover and the fixing plate constituting the fender cover must be produced in response to the form of the fender, and hence general-purpose properties of the fender cover have been low.

JP 2001-348840 A describes a net-like protective block arranged on an outer peripheral surface of a fender formed of a polymer material, a rubber material, or a mixture thereof, and extruded in a substantially square plate shape. At least one connection hole is present for passing a string-like member such as a rope in the vicinity of a side edge facing the protective block.

The present invention has been proposed in order to solve the aforementioned problems, and an object thereof is to provide a fender structure reducing the exchange frequency for a fender body by protecting the fender body with no labor and easily applicable also to an existing fender.

### [Disclosure of the Invention]

In order to attain the aforementioned object, a fender structure according to a first aspect of the present invention is a fender structure according to claim 1 comprising a fender body (12), made of an elastic material, fixed on a quay (80) or the like, including a bumper portion (13) for buffering an impact at the time of aboardage of a ship (81); and a bumper portion covering body (41), made of an elastic material, separably mounted on the fender body, covering a whole of a surface (14) of the bumper portion of the fender body;characterized in that the bumper portion covering body includes a cover body portion (43) covering a whole of the bumper surface and a sheetlike support portion (44) integrally provided on the cover body portion and having a forward end portion detachably fixed to the quay or the like,wherein the bumper portion covering body has a recess portion in the back of the surface so that a part of the bumper portion on the side of the surface can be stored therein.

When constructing the fender structure in this manner, only the bumper portion covering body should be exchanged when the bumper portion covering body is broken.

The fender structure according to a second aspect of the present invention is such that, in the structure of the invention according to the first aspect, at least a part of the bumper portion covering body is relatively movable in a direction deviating with respect to a bumper surface of the bumper portion.

When constructing the fender structure in this manner, the bumper portion covering body relatively moves in the direction deviating with respect to the bumper surface when large external force exceeding a certain degree acts on the fender structure.

The fender structure according to a third aspect of the present disclosure not forming part of the invention is such that, in the structure of the invention according to the first aspect or the second aspect, the fender body has a hollow portion opened on both ends, the bumper portion covering body further includes a fixing member for fixing the fender body and the bumper portion covering body to each other, the fixing member consists of a cordlike member provided on one side of the bumper portion covering body and a cordlike member fixture provided on another side of the bumper portion covering body for fixing the cordlike member, and the cordlike member is arranged on the back side of the bumper portion through the hollow portion and fixed by the cordlike member fixture.

When constructing the fender structure in this manner, the fender body and the bumper portion covering body are hardly unpreparedly separated from each other, while attachment/detachment of the bumper portion covering body is simplified.

The fender structure according to a fourth aspect of the present invention is such that, in the structure of the invention according to the first aspect or the second aspect, the bumper portion covering body includes a cover body portion covering at least a part of the bumper surface and a support portion integrally provided on the cover body portion and detachably fixed to the quay or the like.

When constructing the fender structure in this manner, the bumper portion covering body can be so mounted on the fender body that the cover body portion covers at least a part of the bumper surface by fixing the support portion to the quay.

The fender structure according to a fifth aspect of the present invention is such that, in the structure of the invention according to any of the first aspect to the fourth aspect, a plurality of projecting bodies are provided on a surface of the bumper portion covering body in contact with the bumper portion of the fender body.

When constructing the fender structure in this manner, frictional force caused between the fender body and the bumper portion covering body increases.

The fender structure according to a sixth aspect of the present invention is such that, in the structure of the invention according to any of first aspect to the fifth aspect, the fender body includes at least one concave- or convex-shaped first engaging portion on the bumper portion, while the bumper portion covering body includes at least one convex- or concave-shaped second engaging portion on a flat surface in contact with the bumper portion of the fender body, and the first engaging portion and the second engaging portion are arranged to engage with each other.

When constructing the fender structure in this manner, movement of the bumper portion covering body with respect to force applied in a direction parallel to the flat surface in contact with the bumper portion of the fender body is suppressed.

The fender structure according to a seventh aspect of the present invention is such that, in the structure of the invention according to the sixth aspect, force in a direction parallel to the flat surface in contact with the bumper portion of the fender body is so applied to the bumper portion covering body as to generate first force causing shear fracture in the fender body through the first engaging portion and second force causing shear fracture in the bumper portion covering body through the second engaging portion, and the magnitude of the first force is set to be greater than the magnitude of the second force.

When constructing the fender structure in this manner, the bumper portion covering body is first broken when the force in the parallel direction increases.

The fender structure according to an eighth aspect of the present invention is such that, in the structure of the invention according to any of the first aspect to the seventh aspect, the bumper portion covering body covers the whole surface of the bumper portion of the fender body, and further includes a protective member covering at least a part, closer to the bumper portion, of the corresponding side surface portion of the fender body on at least one of end portions in the horizontal direction.

When constructing the fender structure in this manner, at least a part of the side surface portion of the fender body on the side of the bumper portion is protected with the protective member.

The fender structure according to a ninth aspect of the present invention is such that, in the structure of the invention according to any of the first aspect to the seventh aspect, the bumper portion covering body covers the whole surface of the bumper portion of the fender body , and further includes a protective member covering at least a part, closer to the bumper portion, of at least one side surface portion in the longitudinal direction of the fender body.

When constructing the fender structure in this manner, at least a part of at least one side portion of the fender body in the longitudinal direction on the side of the bumper portion is protected with the protective member.

The fender structure according to a tenth aspect of the present invention is such that, in the structure of the invention according to any of the first aspect to the ninth aspect, the bumper portion covering body is constituted of a plurality of cover units.

When constructing the fender structure in this manner, the size of the constructed bumper portion covering body can be varied with the number of used cover units.

As hereinabove described, the fender structure according to the first aspect of the present invention is such that only the bumper portion covering body can be exchanged when the bumper portion covering body is broken, whereby the fender structure can be used for a long period of time, while the exchange frequency for the entire fender structure is reduced.

The fender structure according to the second aspect of the present invention is such that the bumper portion covering body relatively moves in the direction deviating with respect to the bumper surface when large external force, such as force of a magnitude capable of causing shear fracture in the fender body, for example, acts on the fender structure, whereby it is possible to avoid damage of the fender body, in addition to the effect of the invention according to the first aspect.

The fender structure according to the third aspect of the present invention is such that the fender body and the bumper portion covering body are hardly unpreparedly separated from each other while attachment/detachment of the bumper portion covering body is simplified, whereby reliability at the time of use of the fender body improves and usability ameliorates, in addition to the effect of the invention according to the first aspect or the second aspect.

The fender structure according to the fourth aspect of the present invention is such that the bumper portion covering body can be mounted on the fender body also when the fender body has no hollow portion, in addition to the effect of the invention according to the first aspect or the second aspect.

The fender structure according to the fifth aspect of the present invention is such that frictional force caused between the fender body and the bumper portion covering body increases, whereby the fender body and the bumper portion covering body hardly deviate from each other at the time of aboardage of the ship, in addition to the effect of the invention according to any of the first aspect to the fourth aspect.

The fender structure according to the sixth aspect of the present invention is such that the bumper portion covering body is inhibited from movement with respect to force applied to a direction parallel to the flat surface in contact with the bumper portion of the fender body, whereby the fitting state of the fender body and the bumper portion covering body stabilizes, in addition to the effect of the invention according to any of the first aspect to the fifth aspect.

The fender structure according to the seventh aspect of the present invention is such that the bumper portion covering body is first broken when the force in the parallel direction increases, whereby only the bumper portion covering body may be exchanged, in addition to the effect of the invention according to the sixth aspect.

The fender structure according to the eighth aspect of the present invention is such that at least a part of the side surface portions of the fender body corresponding to at least one of the horizontal end portions is protected with the protective member, whereby apprehension for breakage of the side surface portions of the fender body resulting from aboardage of the ship can be reduced, in addition to the effect of the invention according to any of the first aspect to the seventh aspect.

The fender structure according to the ninth aspect of the present invention is such that at least a part of at least one of the longitudinal side surface portions in the side surface portions of the fender body on the side of the bumper portion is protected with the protective member, whereby apprehension for breakage of the side surface portions of the fender body resulting from aboardage of the ship can be reduced, in addition to the effect of the invention according to any of the first aspect to the seventh aspect.

The fender structure according to the tenth aspect of the present invention is such that it becomes possible to properly cover the bumper surface with the bumper portion covering body also with respect to a fender body having a different length by properly selecting the number of use of the cover units in response to the size of the fender body, in addition to the effect of the invention according to any of the first aspect to the ninth aspect.

### [Brief Description of the Drawings]

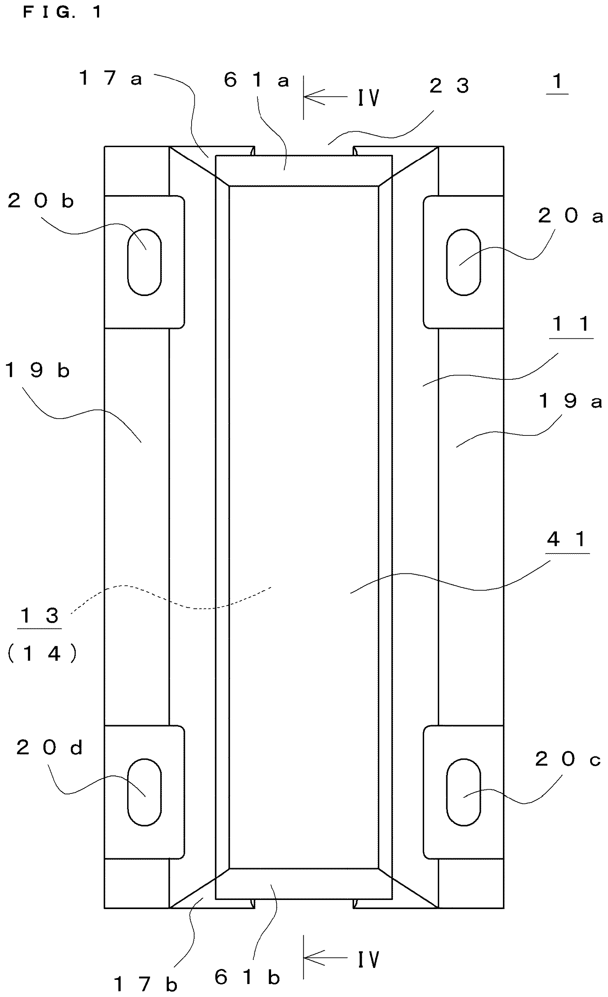

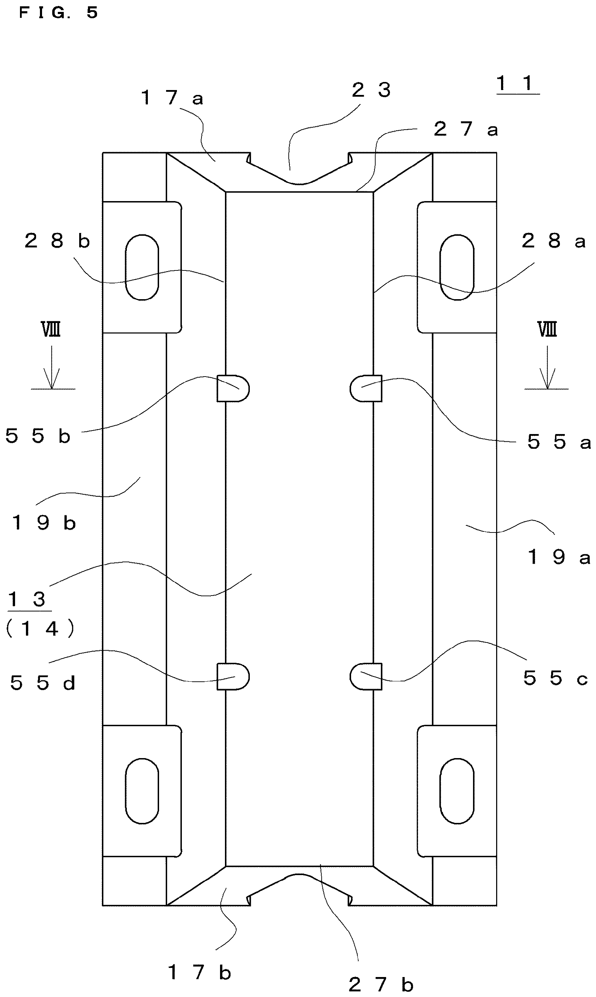

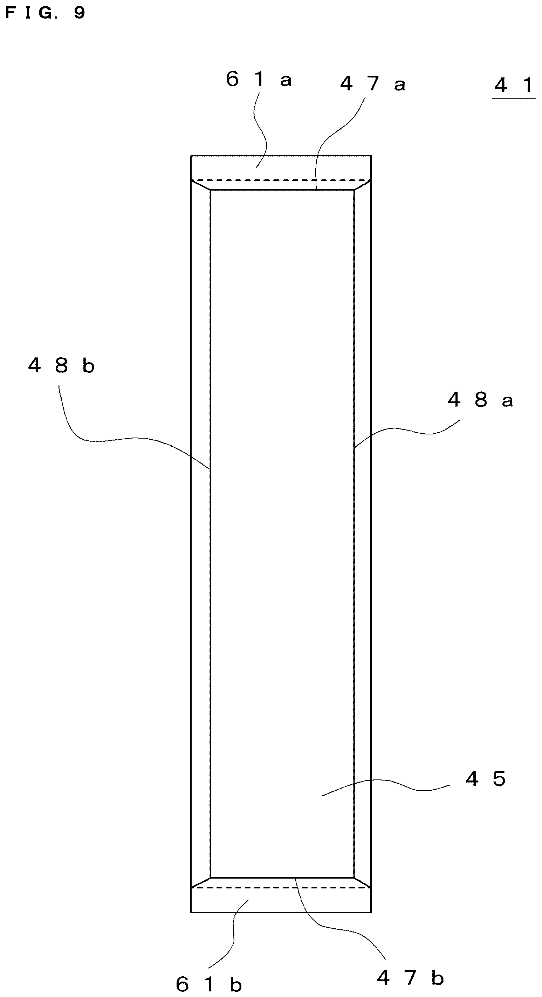

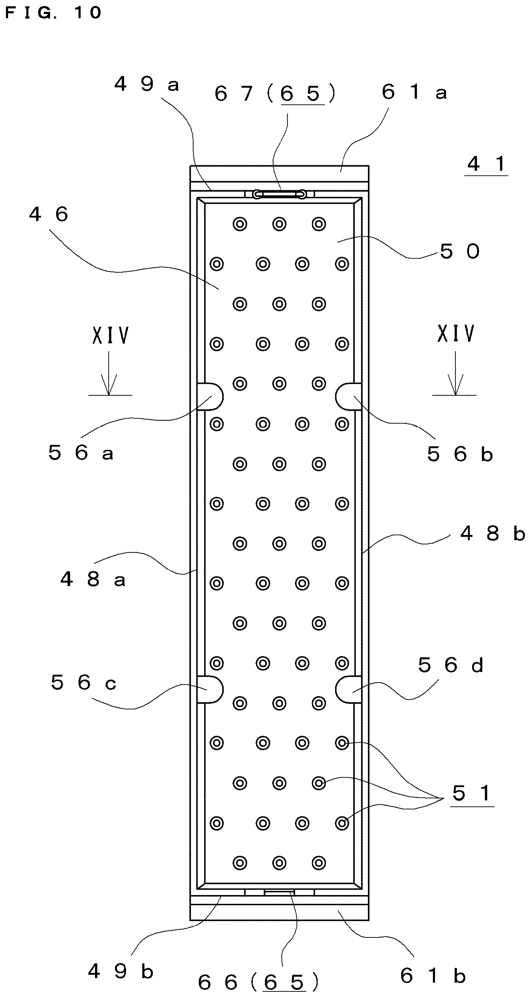

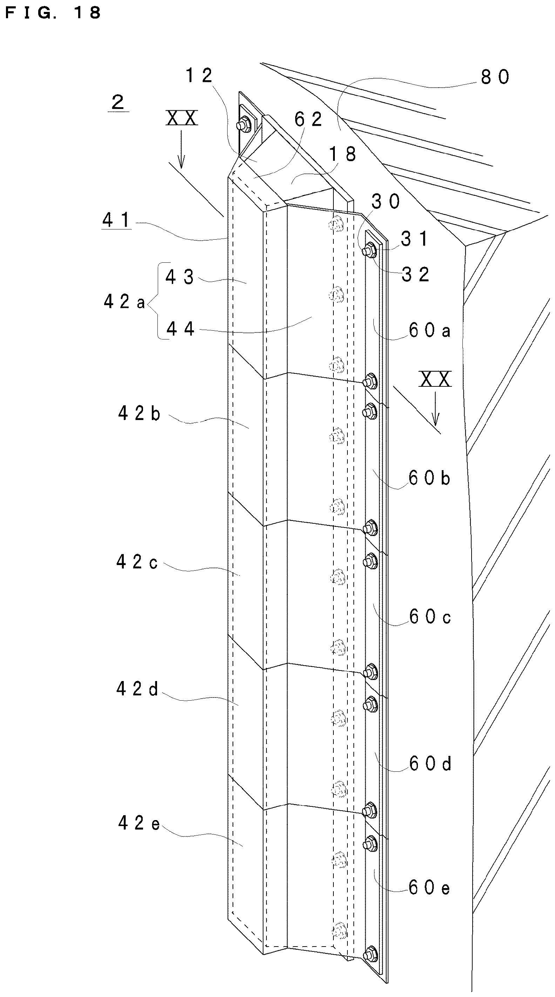

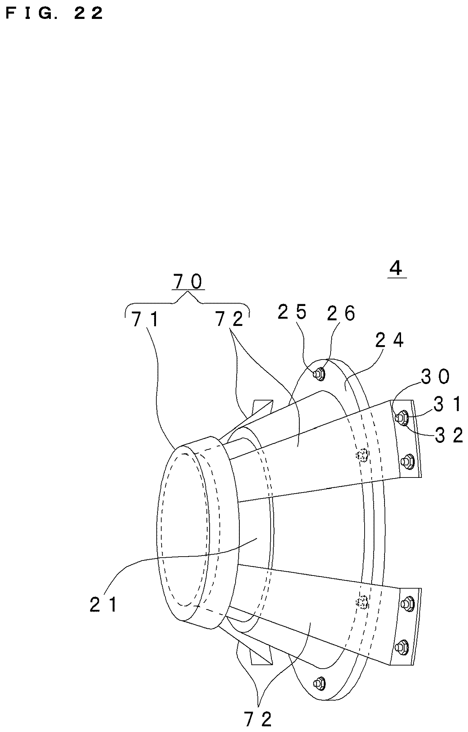

[Fig. 1]
   A schematic front elevational view of a fender structure according to a first embodiment not forming part of the present invention.
[Fig. 2]
   A schematic right-side elevational view of the fender structure shown in Fig. 1.
[Fig. 3]
   A schematic plan view of the fender structure shown in Fig. 1.
[Fig. 4]
   A schematic sectional view as viewed from a line IV-IV shown in Fig. 1.
[Fig. 5]
   A schematic front elevational view of a fender body of the fender structure shown in Fig. 1.
[Fig. 6]
   A schematic right-side elevational view of the fender body shown in Fig. 5.
[Fig. 7]
   A schematic plan view of the fender body shown in Fig. 5.
[Fig. 8]
   A schematic sectional view as viewed from a line VIII-VIII shown in Fig. 5.
[Fig. 9]
   A schematic front elevational view of a bumper portion covering body of the fender structure shown in Fig. 1.
[Fig. 10]
   A schematic rear elevational view of the bumper portion covering body shown in Fig. 9.
[Fig. 11]
   A schematic right-side elevational view of the bumper portion covering body shown in Fig. 9.
[Fig. 12]
   A schematic plan view of a state removing protective members of the bumper portion covering body shown in Fig. 9.
[Fig. 13]
   A schematic bottom plan view of the state removing the protective members of the bumper portion covering body shown in Fig. 9.
[Fig. 14]
   A schematic sectional view as viewed from a line XIV-XIV shown in Fig. 10.
[Fig. 15]
   Schematic diagrams showing actions of projecting bodies of the fender structure shown in Fig. 1.
[Fig. 16]
   Schematic diagrams schematically showing actions of engaging portions of the fender structure shown in Fig. 1.
[Fig. 17]
   Schematic diagrams showing actions of the protective member of the fender structure shown in Fig. 1.
[Fig. 18]
   A perspective view of a state mounting a fender structure according to a second embodiment corresponding to the present invention on a quay.
[Fig. 19]
   An exploded perspective view of the fender structure shown in Fig. 18.
[Fig. 20]
   A sectional view of the fender structure shown in Fig. 18 as viewed from a line XX-XX.
[Fig. 21]
   A perspective view of a state mounting a fender structure according to a third embodiment of the present invention on a quay.
[Fig. 22]
   A perspective view of a fender structure according to a fourth embodiment of the present invention.
[Fig. 23]
   An exploded perspective view of the fender structure shown in Fig. 22.
[Fig. 24]
   A horizontal sectional view of the fender structure shown in Fig. 22.

### [Modes for Carrying Out the Invention]

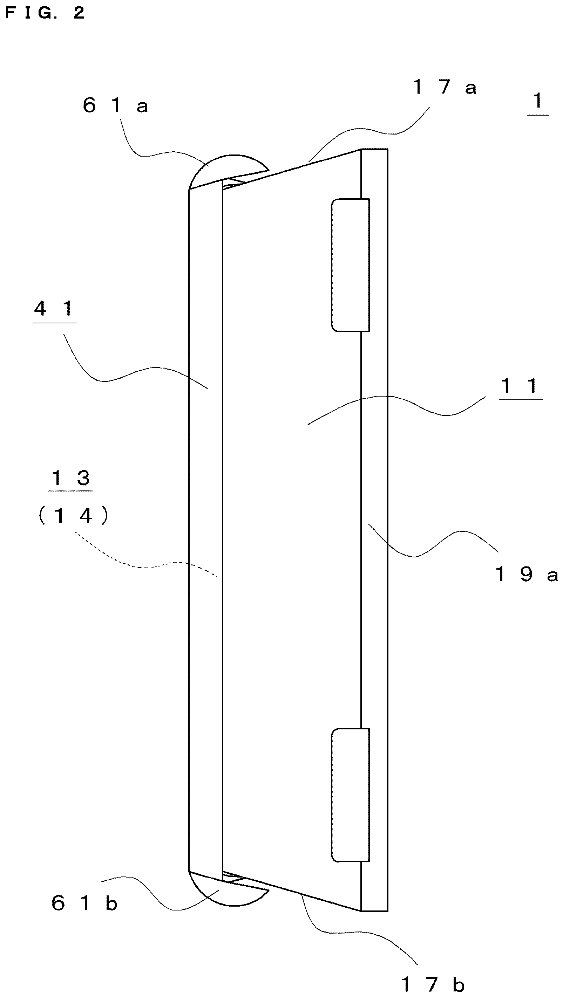

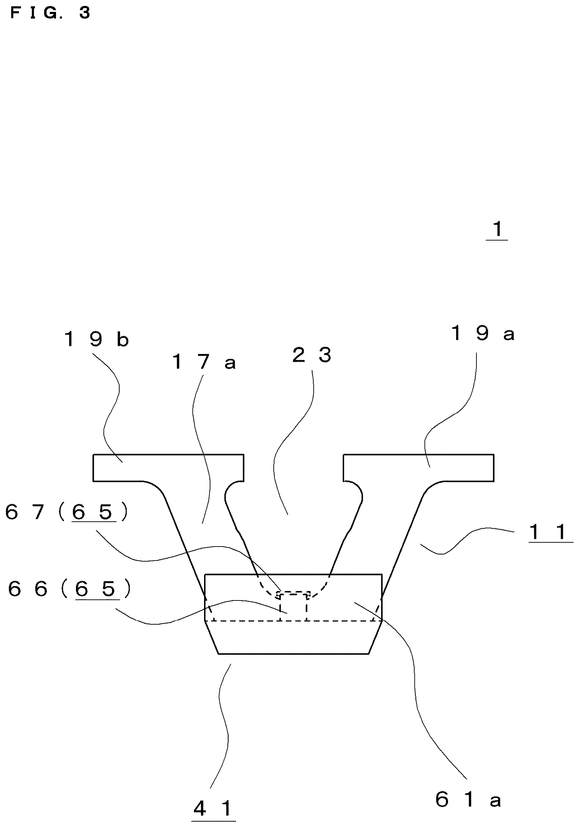

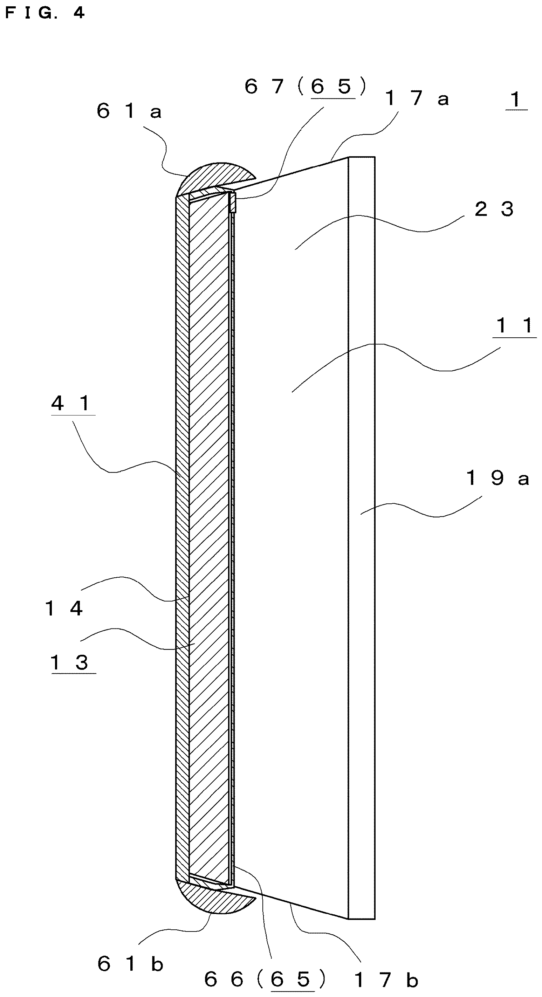

Fig. 1 is a schematic elevational view of a fender structure according to a first embodiment not forming part of the present invention, Fig. 2 is a schematic right-side elevational view of the fender structure shown in Fig. 1, Fig. 3 is a schematic plan view of the fender structure shown in Fig. 1, and Fig. 4 is a schematic sectional view as viewed from a line IV-IV shown in Fig. 1.

The fender structure according to the present invention can be so set that the longitudinal direction is along either one of the vertical direction and the horizontal direction.

Referring to these figures, a fender structure 1 consists of a fender body 11 made of an elastic material such as rubber and including a bumper portion 13 for buffering an impact at the time of aboardage of an unshown ship and quay mounting portions 19a and 19b for mounting the fender structure 1 on an unshown quay and a bumper portion covering body 41 made of the same elastic material, such as rubber, as the fender structure 1. This bumper portion covering body 41 is so detachably mounted as to cover the whole of a surface 14 (a bumper surface) of the bumper portion 13 of the fender body 11. Detailed structures etc. of the fender structure 11 and the bumper portion covering body 41 are described later. The fender structure 1 is fixed by anchor bolts (not shown) by employing bolt mounting holes 20a to 20d etc. while arranging the quay mounting portions 19a and 19b on the quay. In other words, the fender structure 1 can be fixed to the quay by embedding the anchor bolts in the quay, inserting the anchor bolts into the bolt mounting holes 20a to 20d of the fender body 11, screwing nuts (not shown) on the same and tightening the nuts.

When the unshown ship goes alongside the fender structure 1, the bumper portion 13 of the fender body 11 absorbs the impact thereof, while the ship hardly directly comes into contact with the fender body 11 since the surface 14 of the bumper portion 13 is covered with the bumper portion covering body 41. Thus, the bumper portion covering body 41 coming into direct contact with the ship with higher frequency than the fender body 11 is generally broken in advance. At this time, only the broken bumper portion covering body 41 can be exchanged since the bumper portion covering body 41 is detachably mounted on the fender body 11 as described above. Therefore, the fender body 11 can be used over a long period of time, and the exchange frequency for the entire fender structure 1 is reduced.

The specific structure of the fender body 11 is now described.

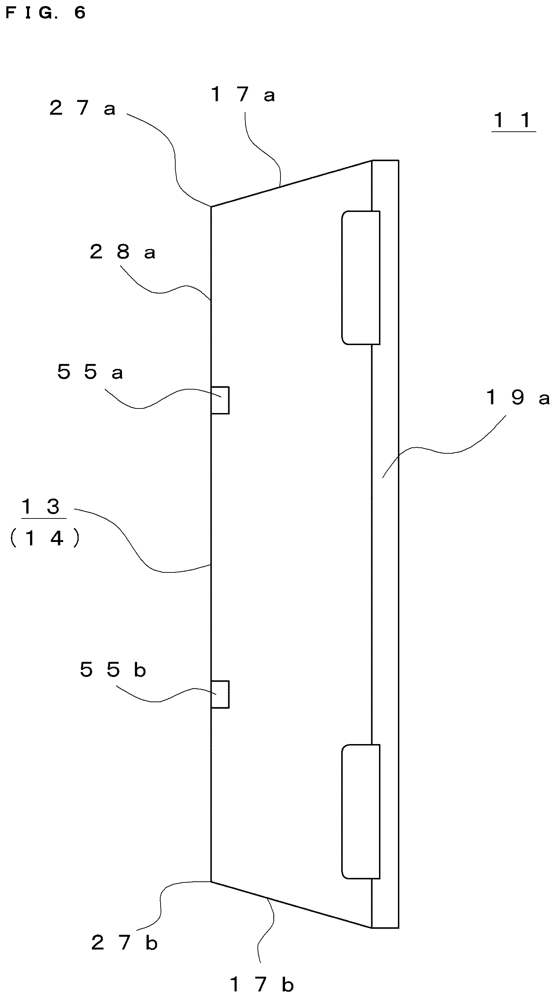

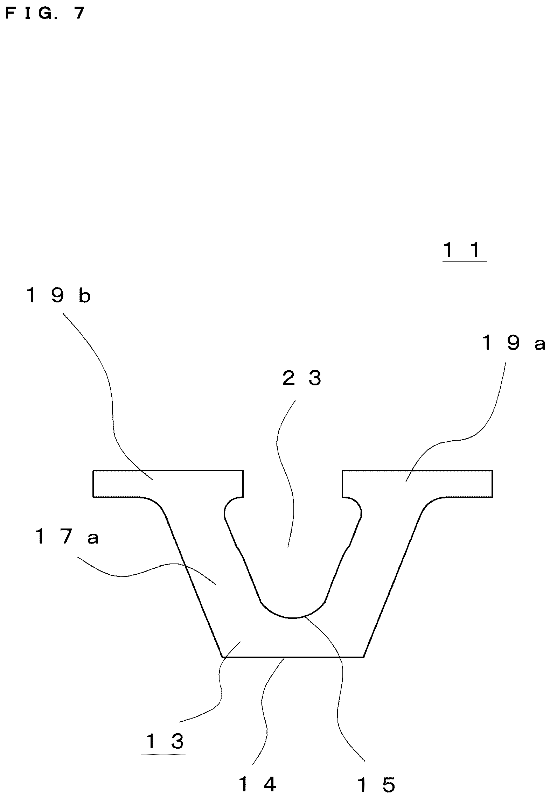

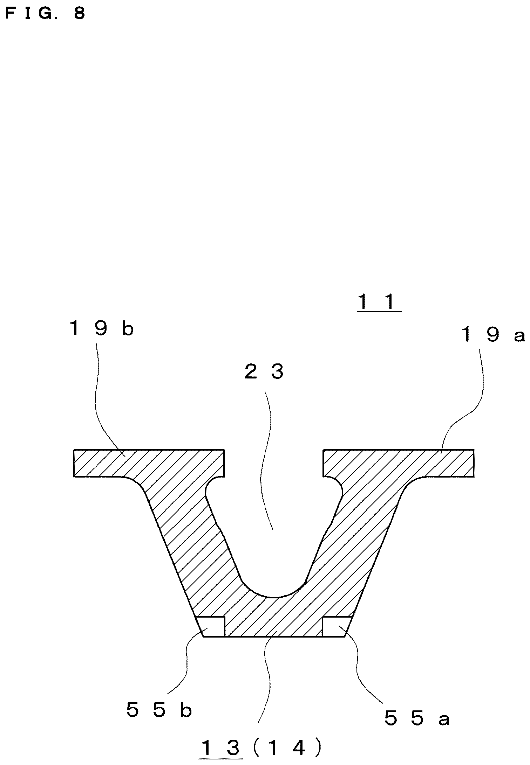

Fig. 5 is a schematic front elevational view of the fender body of the fender structure shown in Fig. 1, Fig. 6 is a schematic right-side elevational view of the fender body shown in Fig. 5, Fig. 7 is a schematic plan view of the fender body shown in Fig. 5, and Fig. 8 is a schematic sectional view as viewed from a line VIII-VIII shown in Fig. 5.

Referring to these figures, the fender body 11 has a substantially V shape in plan view extending in the longitudinal direction, and has a hollow portion 23 opened on both end portions 27a and 27b in the longitudinal direction.

Four first engaging portions 55a to 55d formed by concaved dents are provided on both end portions 28a and 28b of the bumper portion 13 of the fender body 11 in the short-side direction. The respective ones of the first engaging portions 55a to 55d are so arranged as to engage with second engaging portions, described later, provided on the bumper portion covering body.

The reasons for forming the members as the aforementioned respective ones are described later.

The specific structure of the bumper portion covering body 41 is now described.

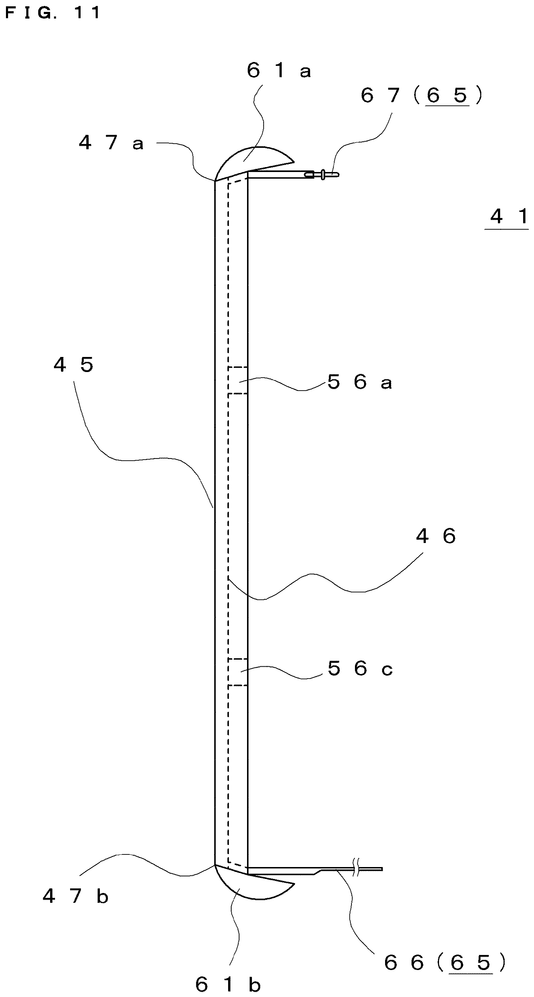

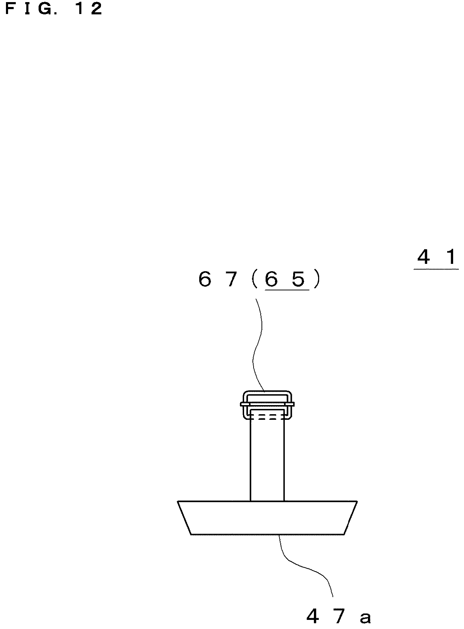

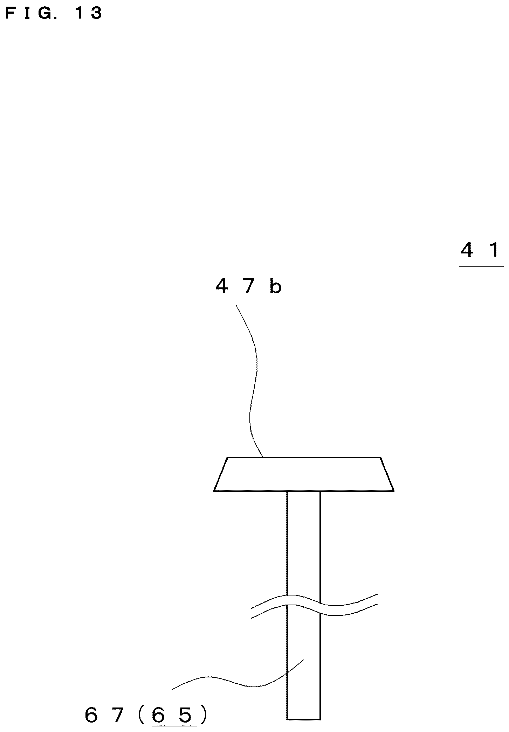

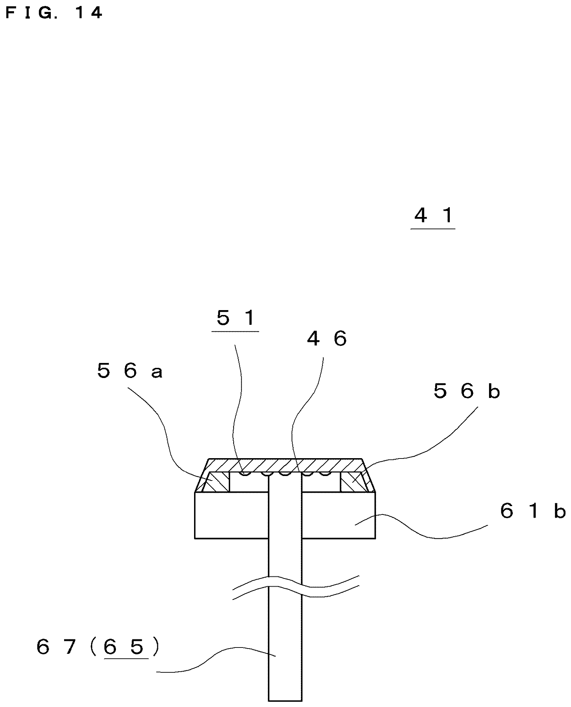

Fig. 9 is a schematic front elevational view of the bumper portion covering body of the fender structure shown in Fig. 1, Fig. 10 is a schematic rear elevational view of the bumper portion covering body shown in Fig. 9, Fig. 11 is a schematic right-side elevational view of the bumper portion covering body shown in Fig. 9, Fig. 12 is a schematic plan view of a state removing protective members of the bumper portion covering body shown in Fig. 9, Fig. 13 is a schematic bottom plan view of the state removing the protective members of the bumper portion covering body shown in Fig. 9, and Fig. 14 is a schematic sectional view as viewed from a line XIV-XIV shown in Fig. 10.

Referring to these figures, the bumper portion covering body 41 has a substantially rectangular shape in front elevational view and a substantially trapezoidal shape in plan view. A back surface 46 of the bumper portion covering body 41 coming into contact with the bumper portion 13 of the fender body 11 is scooped out in response to the peripheral edge of the bumper portion 13 of the fender body 11 shown in Fig. 5. In other words, a recess portion 50 is formed in the back surface 46, so that a part of the bumper portion 13 on the side of the surface 14 can be stored in the recess portion 50.

A plurality of semispherical projecting bodies 51 made of rubber or the like are provided on the back surface 46 (the inner surface of the recess portion 50) of the bumper portion covering body 41 at regular intervals.

Further, four convex second engaging portions 56a to 56d corresponding to the shapes of the first engaging portions 55a to 55d shown in Fig. 5 are provided on both end portions 48a and 48b (the inner side surface of the recess portion 50 along the longitudinal direction) in the short-side direction on the side of the back surface 46 of the bumper portion covering body 41. The respective ones of the second engaging portions 56a to 56d engage with the first engaging portions 55a to 55d provided on the fender body 11 shown in Fig. 5, as described above.

When the fender structure 1 is set while setting the longitudinal direction along the horizontal direction, the bumper portion covering body 41 further includes substantially semicylindrical protective members 61a and 61b on both end portions 47a and 47b in the longitudinal direction (the horizontal direction), as shown in Figs. 9 and 11. The protective members 61a and 61b cover parts of corresponding side surface portions 17a and 17b of the fender body 11 on the side of the bumper portion 13.

The reasons for forming the members as the aforementioned respective ones are described later.

Further, fixing members 65 for fixing the bumper portion covering body 41 to the fender body 11 are mounted on both end portions 49a and 49b of the bumper portion covering body 41 in the longitudinal direction on the side of the back surface 46 respectively. The fixing members 65 consist of bands 66 formed by flat cordlike members made of rubber or the like and buckles 67 serving as cordlike member fixtures fixing the bands 66. Base end portions of the bands 66 are mounted on the bottom surface side of the bumper portion covering body 41, while the buckles 67 are mounted on the upper surface side.

When fixing the bumper portion covering body 41 to the fender body 11 with the fixing members 65, referring again to Figs. 3 and 4, the forward end portions of the bands 66 are inserted into the hollow portion 23 of the fender body 11 from openings on the bottom surface side toward an opening on the upper surface side, and passed through the buckles 67 to be fixed. At this time, the bands 66 are tightened to be along a back surface 15 on the side of the bumper portion 13 of the fender body 11. Then, the bands 66 are arranged along the back surface on the side of the bumper portion 13 through the hollow portion 23.

Thus, the fender body 11 and the bumper portion covering body 41 are hardly unpreparedly separated from each other, whereby reliability of the fender structure 1 at the time of use improves. At the time of removing the bumper portion covering body 41, further, the bands 66 may simply be removed from the buckles 67, whereby attachment/detachment of the bumper portion covering body 41 is simplified and the fender structure 1 improves in convenience.

Actions of the fender body and the projecting bodies etc. provided on the bumper portion covering body of the fender structure are now described.

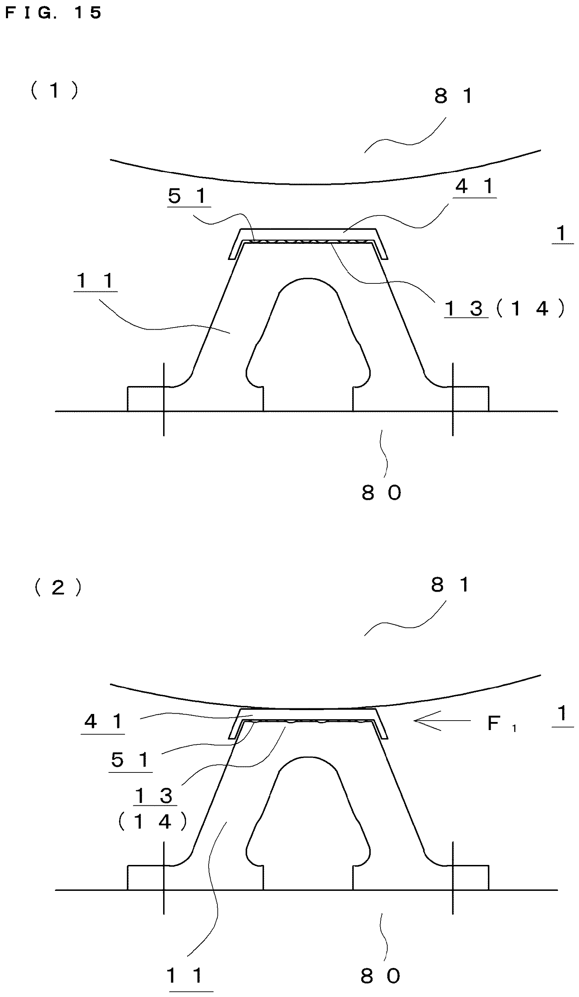

Fig. 15 shows schematic diagrams showing actions of the projecting bodies of the fender structure shown in Fig. 1, while (1) is a diagram showing a state before the ship goes alongside the fender structure, and (2) is a diagram showing a state where the ship further moves in the horizontal direction while going alongside the fender structure.

Referring to (1) in Fig. 15, the fender structure 1 is so set on a quay 80 that the longitudinal direction is perpendicular to the water surface. In a case where a ship 81 does not go alongside the quay, the surface 14 of the bumper portion 13 of the fender body 11 and the forward ends of the projecting bodies 51 formed on the back surface 46 of the bumper portion covering body 41 are in contact with each other.

Referring to (2) in Fig. 15, the bumper portion covering body 41 is pressed against the surface 14 of the bumper portion 13 of the fender body 11 when the ship 81 goes alongside the fender structure 1. At this time, the surface 14 of the bumper portion 13 is deformed in response to the surface shapes of the projecting bodies 51 of the bumper portion covering body 41 since the fender body 11 is made of an elastic material such as rubber, and the surface areas of portions where the bumper portion covering body 41 and the fender body 11 are in contact with each other increase. Therefore, frictional force caused between the fender body 11 and the bumper portion covering body 41 increases. Then, horizontal force F₁ shown by arrow may be applied at the time of aboardage of the ship 81 in response to the movement thereof, while the fender body 11 and the bumper portion covering body 41 hardly deviate from each other at this time.

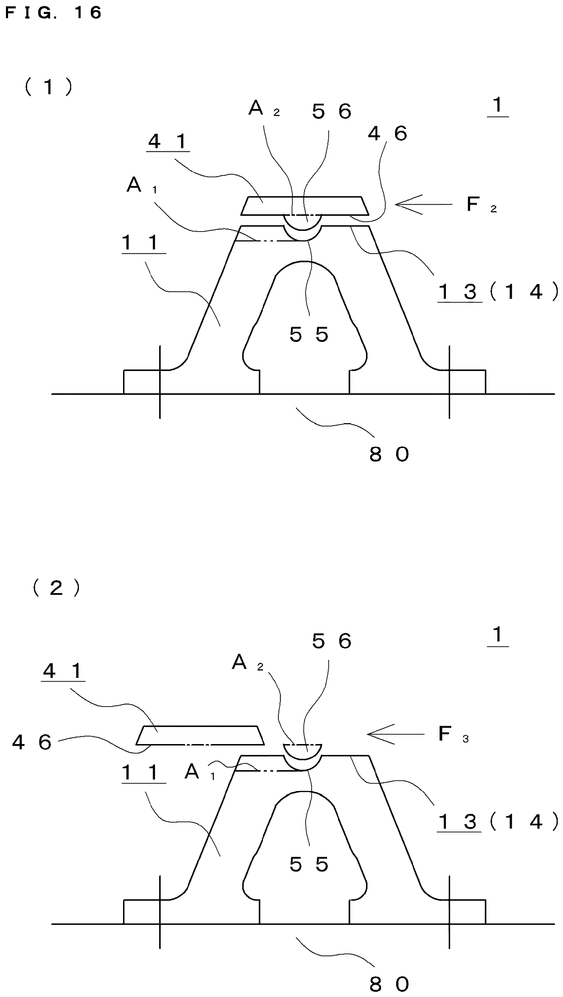

Fig. 16 shows schematic diagrams schematically showing actions of the engaging portions of the fender structure shown in Fig. 1, while (1) shows how shearing force acts on the engaging portions, and (2) shows a case where force of a parallel direction generates shearing force exceeding second shearing force caused in the bumper portion covering body. In Fig. 16, the shapes of each first engaging portion 55 and each second engaging portion 56 are simplified while formed positions are changed to central portions, in order to facilitate understanding.

Referring to (1) in Fig. 16, the fender structure 1 is so set on the quay 80 that the longitudinal direction is perpendicular to the water surface. The fender body 11 includes the first engaging portion 55 which is a concave recess on the surface 14 of the bumper portion 13. The bumper portion covering body 41 includes the second engaging portion 56 having a convex shape corresponding to the recess of the first engaging portion 55 on the back surface 46 which is a flat surface in contact with the bumper portion 13 of the fender body 11. The first engaging portion 55 and the second engaging portion 56 are arranged to engage with each other.

When, in a case where external force acts on the fender body 11, a component in this external force in a direction parallel to the bumper surface 14, i.e., force F₂ shown by arrow is applied to the bumper portion covering body 41, it follows that shearing force is applied to each of an area A₁ of the fender body 11 shown by a two-dot chain line and an area A₂ of the bumper portion covering body 41 shown by a one-dot chain line. It can be said that the magnitude of the shearing force varies with the magnitude of the force F₂. When shearing stress caused in the fender body 11 and the bumper portion covering body 41 exceeds shear strength of these in response to the shearing force applied to the area A₁ and the area A₂, it follows that the fender body 11 or the bumper portion covering body 41 causes shear fracture. The fender body 11 and the bumper portion covering body 41 according to this embodiment are made of the same material, whereby shear strength S₁ of the fender body 11 and shear strength S₂ of the bumper portion covering body 41 can be regarded as identical to each other.

The fender structure 1 is so set that first force P₁ causing shear fracture in the fender body 11 through the first engaging portion 55 at the time when the force F₂ is applied is greater than second force P₂ causing shear fracture in the bumper portion covering body 41 through the second engaging portion 56. This setting is enabled by making the square measure of the area A₁ sufficiently great as compared with the square measure of the area A₂.

In a case where the force F₂ is applied to the bumper portion covering body 41 with a magnitude, not causing shear fracture in the bumper portion covering body 41, less than the second force P₂, the second engaging portion 56 and the first engaging portion 55 remain in the state engaging with each other and movement of the bumper portion covering body 41 with respect to the force F₂ is suppressed, whereby the fitting state of the fender body 11 and the bumper portion covering body 41 stabilizes.

When the force F₂ increases up to F₃ referring to (2) in Fig. 16, shearing force acting on the area A₁ and the area A₂ also increases in response thereto. Then, shearing stress exceeding the shear strength S₁ and S₂ may be caused in the fender body 11 and the bumper portion covering body 41. At this time, the first force P₁ is in the relation greater than the second force P₂ as described above, whereby the bumper portion covering body 41 causes shear fracture in the area A₂ in advance of the fender body 11 when the force F₃ exceeds the second force P₂, so that the fender body 11 is hard to break. Thus, only the broken bumper portion covering body 41 may simply be exchanged.

Contrarily, it is assumed that the second force P₂ is set greater than the first force P₁. When the force F₂ increases up to F₃ in this case, shearing stress exceeding the shear strength S₁ of the fender body 11 may be caused. At this time, the fender body 11 is broken in the area A₁ in advance of the bumper body 41 due to the relation that the first force P₁ is greater than the second force P₂, and it follows that the fender body 11 is broken.

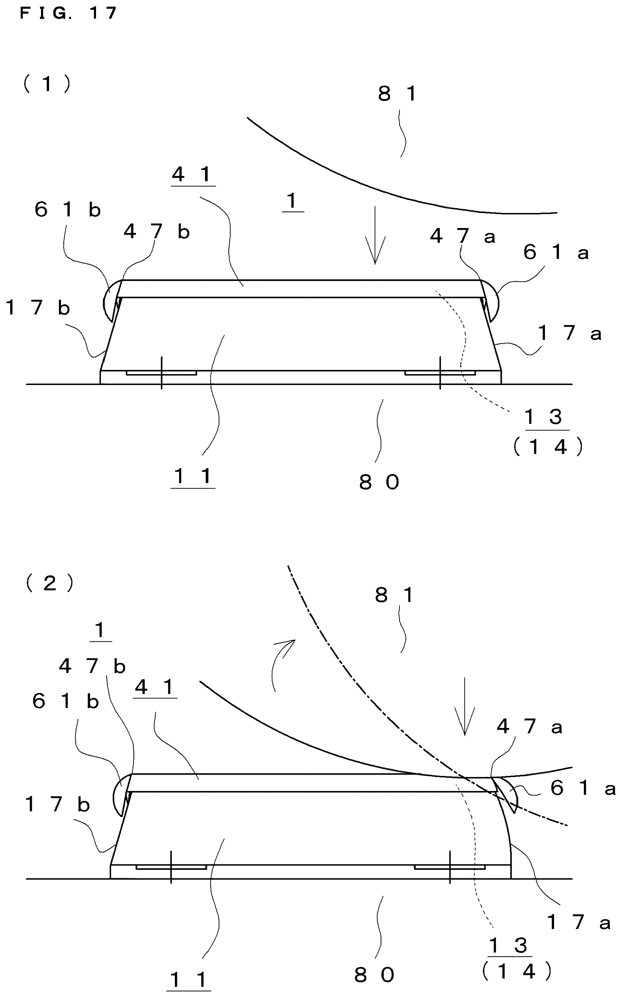

Fig. 17 shows schematic diagrams showing actions of the protective members of the fender structure shown in Fig. 1, while (1) is a diagram showing a state before the ship goes alongside the fender structure, and (2) is a diagram showing a state where the ship goes alongside the fender structure while deviating toward one side thereof.

Referring to (1) in Fig. 17, the fender structure 1 is so set on the quay 80 that the longitudinal direction is parallel to the water surface. When the ship 81 goes alongside the fender structure 1 in this state, there is a case where the ship 81 comes into contact with only a part of the fender structure 1 depending on the aboardage state thereof such that force is not uniformly applied to the whole of the fender structure 1 but applied to only the part thereof.

More specifically, when, referring to (2) in Fig. 17, force is applied to the side of one horizontal end portion 47a in the bumper portion covering body 41, the side of one end portion 47a is largely deformed with respect to the side of another end portion 47b in the fender structure 1. Supposing that there is no protective member 61a, it is apprehended that the ship 81 directly comes into contact with the side surface portion 17a of the fender body 11, as shown by a one-dot chain line. When there is the protective member 61a on the contrary, it follows that the ship 81 comes into contact with the protective member 61a in advance, as shown by a solid line. Thus, the side surface portion 17a of the fender body 11 is protected by the protective member 61a, whereby such an apprehension that the side surface portion 17a of the fender body 11 is broken due to the aboardage of the ship 81 can be reduced.

While the bumper portion covering body has covered the whole of the surface of the bumper portion of the fender body in the aforementioned embodiment, the same may simply cover at least a part of the surface of the bumper portion.

While such a structure has been employed in the aforementioned embodiment that a plurality of projecting bodies are provided on the back surface of the bumper portion covering body, the projecting bodies may not be present.

While the plurality of projecting bodies provided on the back surface of the bumper portion covering body have been semispherical in the aforementioned embodiment, the same may have other shapes.

Further, while such a structure has been employed in the aforementioned embodiment that the first engaging portions are provided on the bumper portion of the fender body and the second engaging portions are provided on the flat surface of the bumper portion covering body coming into contact with the bumper portion of the fender body, the first engaging portions and the second engaging portions may not be provided.

Further, while such a structure has been employed in the aforementioned embodiment that four first engaging portions of the concave shapes are provided on the bumper portion of the fender body and four second engaging portions of the convex shapes are provided on the flat surface of the bumper portion covering body coming into contact with the bumper portion of the fender body, the present invention is not restricted to this. At least one first engaging portion and at least one second engaging portion may simply be provided on positions corresponding to each other. Further, the first engaging portions may be formed in convex shapes, and the second engaging portions may be formed in concave shapes. When, also in these cases, the first force causing shear fracture in the fender body through the first engaging portions is set greater than the second force causing shear fracture in the bumper portion covering body through the second engaging portions at a time when force in a direction parallel to the flat surface coming into contact with the bumper portion of the fender body is applied to the bumper portion covering body, the bumper portion covering body is first broken similarly to the aforementioned embodiment, also when the force in the parallel direction increases. Thus, the apprehension of breakage of the fender body is reduced, such that only the bumper portion covering body may simply be exchanged.

While such a structure has been employed in the aforementioned embodiment that the protective members are provided on both longitudinal end portions of the bumper portion covering body, the same may be provided on at least one of the end portions in the longitudinal direction. Further, the protective members may not be provided.

While the protective members have covered the side surface portions of the fender body and parts on the side of the bumper portion in the aforementioned embodiment, the same may cover the whole surfaces of the side surface portions of the fender body.

While the aforementioned embodiment has included cordlike members (bands) of the fixing members and cordlike member fixtures (buckles), the fixing members may not be present.

While the cordlike members and the cordlike member fixtures of the fixing members have consisted of the bands and the buckles in the aforementioned embodiment, the present invention is not restricted to this. When the cordlike members are arranged on the back surface on the side of the bumper portion through the hollow portion of the fender body and fixed by the cordlike member fixtures, other members such as wires and hooks etc. may be employed, for example. Further, the cordlike members may be coated with rubber or resin, or may be covered with cylindrical bodies made of rubber or resin.

Further, while the positions where the cordlike members and the cordlike member fixtures of the fixing members are fixed have been around one opening of the hollow portion of the fender body in the aforementioned embodiment, the fixed positions are not restricted thereto. For example, the present invention may have such a structure that the cordlike members and the cordlike member fixtures are fixed on another position such as around the center of the hollow portion, for example.

Further, while the fender body has had the hollow portion in the aforementioned embodiment, the hollow portion may not be present.

Further, while the fender body has been substantially V-shaped in plan view in the aforementioned embodiment, the present invention can be similarly applied also to a fender of another shape such as a truncated-conical shape, for example.

Further, while the bumper portion covering body has been rectangular in front elevational view and substantially trapezoidal in plan view in the aforementioned embodiment, the same may have another shape.

While the materials for the fender body and the bumper portion covering body have been made of rubber, the present invention is not restricted to this.

While such a structure has been employed in the aforementioned embodiment that the bumper portion covering body is made of the material identical to that for the fender body, the same may be replaced with another material, or the present invention may have such a structure that a different material is added to the surface of the bumper portion covering body in a layer-like manner. For example, the surface of the bumper portion covering body may be covered with ultrahigh molecular weight polyethylene. In this case, the ultrahigh molecular weight polyethylene has a lower coefficient of friction as compared with the rubber material and the ship easily slides on the surface of the bumper portion covering body at the time of aboardage, whereby the apprehension of damaging the ship is reduced.

Further, while the aforementioned embodiment has presupposed a new fender body, the present invention can be similarly applied also to an existing fender body.

In the aforementioned embodiment, the bumper portion covering body may be set to relatively move in a direction deviating with respect to the bumper surface of the fender body when receiving external force, regardless of the presence or absence of the projecting bodies and the first and second engaging portions. For example, the present invention may be so structured that the bumper portion covering body relatively moves in the deviating direction when, in a case of receiving external force, a component of the external force in a direction parallel to the bumper surface exceeds a magnitude causing shear fracture in the fender body. Thus, when excessive external force acts, the bumper portion covering body so relatively moves as to relax influence by the external force and damage of the fender body can be avoided.

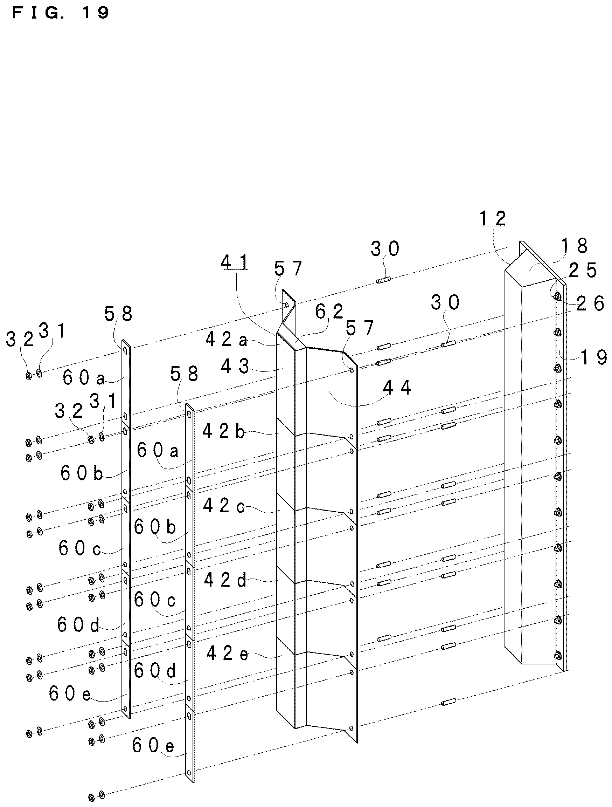

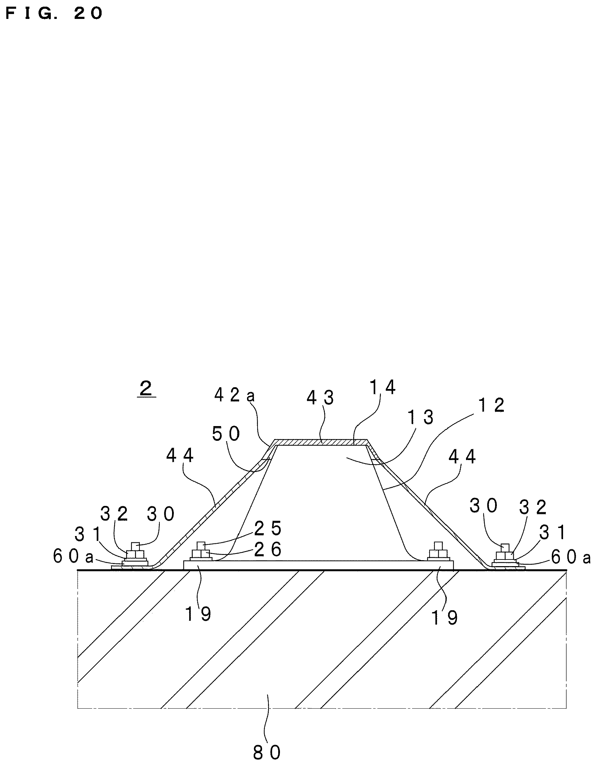

Fig. 18 is a perspective view of a state mounting a fender structure according to a second embodiment of the present invention on a quay, Fig. 19 is an exploded perspective view of the fender structure shown in Fig. 18, and Fig. 20 is a sectional view of the fender structure shown in Fig. 18 as viewed from a line **XX-XX.**

This embodiment makes it possible to mount a bumper portion covering body 41 also in a case where a fender body 12 has no hollow portion. In a fender structure 2 according to this embodiment, the bumper portion covering body 41 includes a cover body portion 43 covering at least a part of a surface (a bumper surface) 14 of a bumper portion 13 of the fender body 12 and support portions 44 integrally provided on the cover body portion 43 and detachably fixed to a quay 80 or the like. Thus, it is possible to mount the bumper portion covering body 41 on the fender body 12 so that the cover body portion 43 covers at least a part of the bumper surface 14 by fixing the support portions 44 to the quay 80 or the like.

In this embodiment, further, the bumper portion covering body 41 is constituted of a plurality of first to fifth cover units 42a to 42e. The first to fifth cover units 42a to 42e are formed in substantially identical forms, and hence detailed description of these is represented by description as to the first cover unit 42a.

The first cover unit 42a includes a cover body portion 43 superposed on the bumper surface 14 and a pair of support portions 44 integrally provided on both side portions of the cover body portion 43 along the longitudinal direction of the fender body 12.

The cover body portion 43 is formed to have a trapezoidal section opened on a back surface side to be capable of storing a part on the side of the bumper surface 14. In a case where the fender body 12 is so fixed that the longitudinal direction is along the vertical direction, a protective portion 62 covering a part of a side surface portion 18 on an upper end side of the fender body 12 is provided on the cover body portion 43 as to the first cover unit 42a positioned on the uppermost portion. This protective portion 62 is omitted in the second to fifth cover units 42b to 42e.

The support portions 44 have sheetlike forms extending from the cover body portion 43 toward the side of the quay 80, and opening holes 57 for receiving anchor bolts 30 described later are provided on forward end-side regions thereof. In this embodiment, two opening holes 57 are formed as to one support portion 44. In this embodiment, further, presser members 60a to 60e arranged on the support portions 44 for ensuring the state fixed to the quay 80 are employed for the respective ones of the support portions 44 of the first to fifth cover units 42a to 42e. Opening holes 58 for receiving the anchor bolts 30 are formed also in the respective presser members 60a to 60e.

In order to construct the fender structure 2, the fender body 12 is fixed to the quay 80 with anchor bolts 25 and nuts 26 as shown in Fig. 19, whereafter the first to fifth cover units 42a to 42e are successively fixed to the quay 80, to cover the fender body 12. Therefore, the anchor bolts 30 are previously embedded in the quay 80 in the vicinity of the fender body 12, in response to the positions of the respective opening holes 57 formed in the support portions 44 of the first to fifth cover units 42a to 42e. Then, the cover body portion 43 of the first cover unit 42a positioned on the uppermost portion is first superposed on the bumper portion 13, while the support portions 44 are arranged on the surface of the quay 80 by inserting the anchor bolts 30 into the opening holes 57 thereof. Then, the presser members 60a are arranged on the support portions 44 by inserting the anchor bolts 30 into the opening holes 58 thereof. Thereafter the nuts 32 are fastened to the anchor bolts 30 through washers 31, and so tightened as to fix the first cover unit 42a.

Then, the second cover unit 42b is fixed to the quay 80 in a process similar to the above, to be adjacent to the first cover unit 42a. Then, the third to fifth cover units 42c to 42e are also successively fixed to the quay 80 in similar processes to be adjacent to each other respectively, whereby the bumper portion covering body 41 covering the whole of the bumper surface 14 of the fender body 12 is constituted.

Thus, the bumper portion covering body 41 according to this embodiment can be so mounted on the fender body 12 that the cover body portion 43 covers at least a part of the bumper surface 14 by fixing the support portions 44 to the quay 80, whereby the same can be applied also to the fender body 12 having no hollow portion.

Further, the bumper portion covering body 41 is constituted of the plurality of cover units 42a to 42e, whereby the size of the constituted bumper portion covering body 41 can be varied with the number of use of the cover units. In other words, it becomes possible to properly cover the bumper surface 14 also when the fender body 12 has a different length, by using a proper number of cover units responsive to the size of the fender body 12. More specifically, while the five cover units 42a to 42e have been used with respect to the fender body 12 shown in Figs. 18 and 19, the number of use of the cover units may be reduced to not more than four with respect to a fender body 12 shorter than the same, and it is possible to cope with a case of a contrarily longer fender body by using at least six cover units.

While the bumper portion covering body 41 can also be so provided that relative movement is difficult with respect to the fender body 12, the same may be so constituted as to be capable of relatively moving in a direction deviating with respect to the bumper surface 14 of the fender body 12 when receiving external force. For example, the bumper portion covering body 41 can be so constituted that the cover body portion 43 is relatively movable in a direction parallel to the bumper surface 14 in a case where the bumper portion covering body 41 receives external force, by fixing the support portions 44 to the quay 80 in a state slightly relaxed with bending. At this time, it is conceivable to set the condition for relative movement of the bumper portion covering body 41 when a component of the acting external force in a direction parallel to the bumper surface 14 exceeds a magnitude causing shear fracture in the fender body 12, for example. Thus, when excessive external force acts on the fender body, the bumper portion covering body 41 so bodily moves in the deviating direction as to be capable of buffering the external force and avoiding damage of the fender body 12.

It is also possible to constitute the bumper portion covering body 41 not to easily relatively move also when receiving external force, by straining the support portions 44 and fixing the same to the quay 80 in an unbent state.

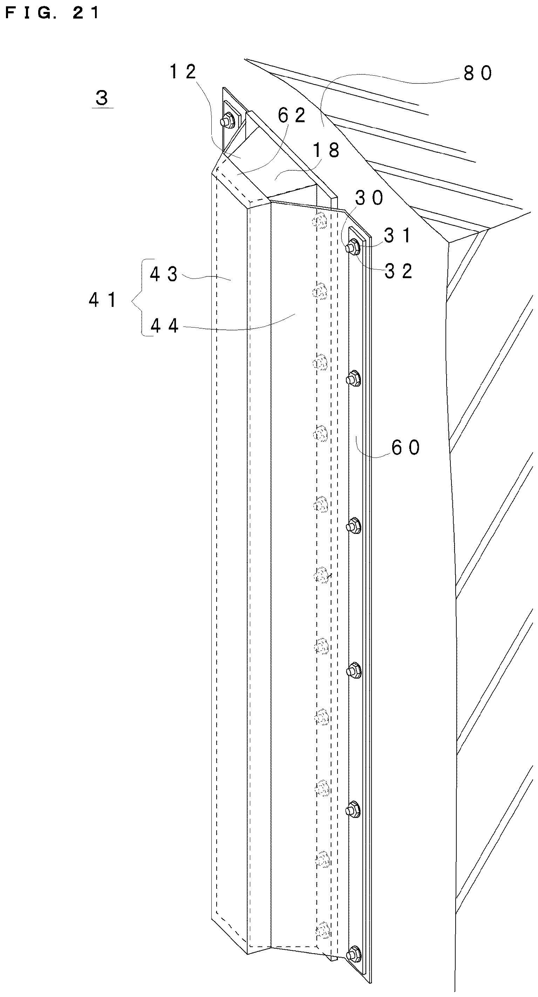

Fig. 21 is a perspective view of a state mounting a fender structure according to a third embodiment of the present invention on a quay. A fender structure 3 shown in Fig. 21 is prepared by manufacturing a bumper portion covering body 41 in response to the length of a fender body 12 as a single member. Presser members 60 employed when fixing the bumper portion covering body 41 to a quay 80 are also prepared as long size members responsive to the length of the fender body 12. In the fender structure 3 according to this embodiment, the number of components is reduced as compared with the aforementioned embodiment employing the cover units, whereby the number of working steps at the time of setting is reduced, and constructiveness can be improved. A fender body 12 of a different length may be coped with by preparing a bumper portion covering body 41 having a different length.

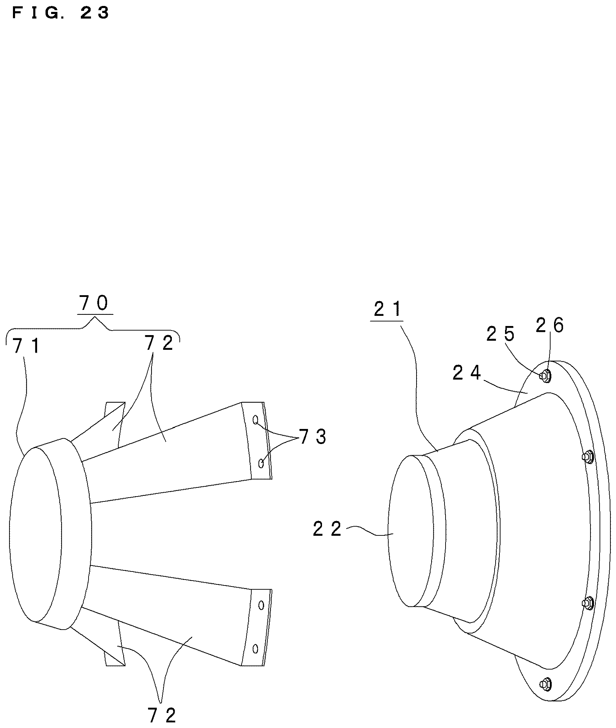

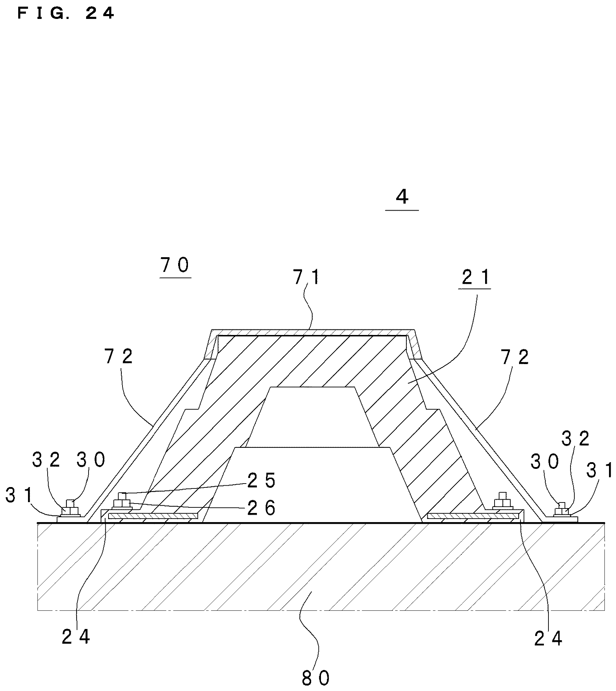

Fig. 22 is a perspective view of a fender structure according to a fourth embodiment of the present invention, Fig. 23 is an exploded perspective view of the fender structure shown in Fig. 22, and Fig. 24 is a horizontal sectional view of the fender structure shown in Fig. 22.

As shown in these Figs. 22 to 24, this embodiment is implemented by mounting a bumper portion covering body 70 with respect to a fender body 21 having a truncated conical form for constituting a fender structure 4. As shown in Fig. 23, a fender body 21 according to this embodiment has a circular bumper surface 22 on a forward end side, and has a mounting portion 24 formed in a flange-like manner over the entire periphery on a base end side. In response to such a form of the fender body 21, the bumper portion covering body 70 is constituted of a shallow truncated-conical cover body portion 71 and a plurality of support portions 72 so provided as to protrude from a peripheral portion thereof. Opening holes 73 for receiving anchor bolts described later are formed on forward end sides of the respective support portions 72.

Mounting of the aforementioned bumper portion covering body 70 is performed in a process similar to those of the second and third embodiments. In other words, after fixing the fender body 21 to a quay 80 with anchor bolts 25 and nuts 26, anchor bolts 30 are previously embedded in the quay 80 in the vicinity of the fender body 21 in response to the positions of the respective opening holes 73 formed in the support portions 72 of the bumper portion covering body 70. Then, the cover body portion 71 of the bumper portion covering body 70 is superposed on the bumper surface 22, and the support portions 72 are arranged on the surface of the quay 80 by inserting the anchor bolts 30 into the opening holes 73 thereof. Then, the bumper portion covering body 70 can be fixed to the quay 80 to cover the fender body 21, by fastening nuts 32 to the anchor bolts 30 through washers 31 and tightening the same.

While the bumper portion covering body has covered the whole of the bumper surface of the fender body in each of the aforementioned second to fourth embodiments, the same may simply cover at least a part of the bumper surface.

Also in each of the aforementioned third and fourth embodiments, the bumper portion covering body may be so prepared as to relatively move in a direction deviating with respect to the bumper surface of the fender body when the fender structure receives external force. For example, the bumper portion covering body can be so constituted as to relatively move in the direction deviating with respect to the fender body when, in a case of receiving external force, a component of this external force in a direction parallel to the bumper surface exceeds a magnitude causing shear fracture in the fender body.

Further, a plurality of projecting bodies may be provided on the back surface of the bumper portion covering body in each of the aforementioned second to fourth embodiments. In this case, the projecting bodies may be semispherical ones, or may have other shapes.

Further, each of the aforementioned second to fourth embodiments may have a structure of providing first engaging portions on the bumper portion of the fender body and providing second engaging portions on the bumper portion covering body. In this case, the first engaging portions and the second engaging portions may be formed in concaved and convex manners respectively. While the numbers of the first engaging portions and the second engaging portions may be four and four respectively, for example, at least one first engaging portion and one second engaging portion may simply be provided. The first engaging portions and the second engaging portions may be so set that the second engaging portions of the bumper portion covering body are shear-fractured before causing shear fracture in the fender body when force in a direction parallel to the bumper surface is applied to the bumper portion covering body. Thus, apprehension for breakage of the fender body is reduced.

Further, protective members may be provided on both longitudinal end portions of the bumper portion covering body or at least one of the longitudinal end portions in each of the aforementioned second and third embodiments. In this case, the protective members may be prepared in structures of covering parts of side surface portions of the fender body on the side of the bumper portion or the whole surfaces of the side surface portions.

Further, abrasion resistance may be improved by thickly forming the protective portion provided on at least one of the longitudinal end portions of the bumper portion covering body in each of the aforementioned second and third embodiments. In this case, the protective portion may be brought into a form similar to that of the protective member in the first embodiment.

Further, while the bumper portion covering body has had a substantially rectangular shape in front elevational view and a substantially trapezoidal shape in plan view in each of the aforementioned second and third embodiments, the same may have another shape.

Further, while the fender body and the bumper portion covering body have been made of rubber in each of the aforementioned second to fourth embodiments, the present invention is not restricted to this. In addition, the fender body and the bumper portion covering body may be made of the same material or different materials.

Further, each of the aforementioned second to fourth embodiments may have a structure of adding a different material to the surface of the bumper portion covering body in a layered manner. For example, the surface of the bumper portion covering body may be coated with an ultrahigh molecular weight polyethylene layer. The ultrahigh molecular weight polyethylene has a lower coefficient of friction as compared with a rubber material so that a ship easily slides on the surface of the bumper portion covering body at the time of aboardage, whereby the apprehension of damaging the ship is reduced when coating the surface with the same.

Further, each of the aforementioned second to fourth embodiments may presuppose a new fender body, the same can be similarly applied also to an existing fender body.

Further, the fender body may have a hollow portion, and may be V-shaped in section in each of the aforementioned second and third embodiments. In this case, the fender body may further include fixing members consisting of cordlike members and cordlike member fixtures. The fixing members may be constituted of wires and hooks etc., for example, in addition to those consisting of bands and buckles. The cordlike members may be cylindrical bodies coated with rubber or resin, or may be covered with cylindrical bodies made of rubber or resin. The positions where the cordlike members and the cordlike member fixtures of the fixing members are fixed may be around one opening of the hollow portion of the fender body, or other positions such as around the center of the hollow portion.

Although the present invention has been described and illustrated in detail, it is clearly understood that the same is by way of illustration and example only and is not to be taken by way of limitation, the scope of the present invention being limited only by the terms of the appended claims.

### [Industrial Availability]

The fender structure according to the present invention is applicable not only to a fender body newly set on a quay, but also to a fender body already mounted on a quay. In particular, that having such a structure that a bumper portion covering body includes support portions fixed to a quay is suitable for constructing the fender structure according to the present invention by mounting a bumper portion covering body on an existing fender body. Further, the present invention is applicable to both of a case where the longitudinal direction of the fender body is horizontally arranged and a case where the longitudinal direction of the fender body is vertically arranged. In addition, the present invention is applicable also to a case where the fender body is in a form such as a truncated conical form or a truncated pyramidal form having no longitudinal direction, for example.

## Claims

1. A fender structure (1) comprising:
a fender body (12), made of an elastic material, fixed on a quay (80) or the like, including a bumper portion (13) for buffering an impact at the time of aboardage of a ship (81); and
a bumper portion covering body (41), made of an elastic material, separably mounted on the fender body, covering a whole of a surface (14) of the bumper portion of the fender body;
**characterized in that** the bumper portion covering body includes a cover body portion (43) covering a whole of the bumper surface and a sheetlike support portion (44) integrally provided on the cover body portion and having a forward end portion detachably fixed to the quay or the like,
wherein the bumper portion covering body has a recess portion (50) in the back (46) of the surface so that a part of the bumper portion on the side of the surface (14) can be stored therein.

2. The fender structure according to claim 1, wherein
at least a part of the bumper portion covering body is relatively movable in a direction deviating with respect to a bumper surface (22) of the bumper portion.

3. The fender structure according to either of claim 1 or claim 2, provided on a surface of the bumper portion covering body with a plurality of projecting bodies (51) in contact with the bumper portion of the fender body.

4. The fender structure according to any of claim 1 to claim 3, wherein
the fender body includes at least one concave- or convex-shaped first engaging portion (55a to 55d) on the bumper portion, while the bumper portion covering body includes at least one convex- or concave-shaped second engaging portion (56a to 56d) on a flat surface in contact with the bumper portion of the fender body, and
the first engaging portion and the second engaging portion are arranged to engage with each other.

5. The fender structure according to claim 4, wherein force in a direction parallel to the flat surface in contact with the bumper portion of the fender body is so applied to the bumper portion covering body as to generate first force causing shear fracture in the fender body through the first engaging portion and second force causing shear fracture in the bumper portion covering body through the second engaging portion, and the magnitude of the first force is set to be greater than the magnitude of the second force.

6. The fender structure according to any of claim 1 to claim 5, wherein
the bumper portion covering body covers the whole surface of the bumper portion of the fender body, and further includes a protective member (61a, 61b) covering at least a part, closer to the bumper portion, of the corresponding side surface portion (17a, 17b) of the fender body on at least one of end portions in the horizontal direction.

7. The fender structure according to any of claim 1 to claim 5, wherein
the bumper portion covering body covers the whole surface of the bumper portion of the fender body, and further includes a protective member covering at least a part, closer to the bumper portion, of at least one side surface portion (27a, 27b) in the longitudinal direction of the fender body.

8. The fender structure according to any of claim 1 to claim 7, wherein
the bumper portion covering body is constituted of a plurality of cover units (42a to 42e).

## Patentansprüche

1. Fenderkonstruktion (1), die Folgendes umfasst:
einen Fenderhauptteil (12), der aus einem elastischen Material hergestellt ist, an einem Kai (80) oder dergleichen befestigt ist und einen Pufferabschnitt (13) zum Dämpfen eines Stoßes zum Zeitpunkt eines Anschlagens eines Schiffes (81) aufweist, und
einen den Pufferabschnitt bedeckenden Hauptteil (41), der aus einem elastischen Material hergestellt ist, abnehmbar an dem Fenderhauptteil angebracht ist und eine gesamte Oberfläche (14) des Pufferabschnitts des Fenderhauptteils bedeckt,
**dadurch gekennzeichnet, dass** der den Pufferabschnitt bedeckende Hauptteil einen Abdeckhauptteilabschnitt (43), der eine gesamte Pufferoberfläche bedeckt, und einen plattenartigen Halteabschnitt (44) aufweist, der einstückig an dem Abdeckhauptteilabschnitt vorgesehen ist und einen vorderen Endabschnitt aufweist, der lösbar an dem Kai oder dergleichen befestigt ist,
wobei der den Pufferabschnitt bedeckende Hauptteil auf der Rückseite (46) der Oberfläche einen Vertiefungsabschnitt (50) aufweist, so dass ein Teil des Pufferabschnitts auf der Seite der Oberfläche (14) darin untergebracht sein kann.

2. Fenderkonstruktion nach Anspruch 1, wobei
zumindest ein Teil des den Pufferabschnitt bedeckenden Hauptteils in einer von einer Pufferoberfläche (22) des Pufferabschnitts abweichenden Richtung relativ beweglich ist.

3. Fenderkonstruktion nach Anspruch 1 oder 2, die an einer Oberfläche des den Pufferabschnitt bedeckenden Hauptteils mit mehreren vorstehenden Hauptteilen (51) versehen ist, welche den Pufferabschnitt des Fenderhauptteils berühren.

4. Fenderkonstruktion nach einem der Ansprüche 1 bis 3, wobei
der Fenderhauptteil mindestens einen konkav oder konvex geformten ersten Eingriffabschnitt (55a bis 55d) an dem Pufferabschnitt aufweist, während der den Pufferabschnitt bedeckende Hauptteil an einer den Pufferabschnitt des Fenderhauptteils berührenden flachen Oberfläche mindestens einen konvex oder konkav geformten zweiten Eingriffabschnitt (56a bis 56d) aufweist, und
der erste und der zweite Eingriffabschnitt so angeordnet sind, dass sie ineinandergreifen.

5. Fenderkonstruktion nach Anspruch 4, wobei
eine Kraft in einer parallel zu der den Pufferabschnitt des Fenderhauptteils berührenden flachen Oberfläche verlaufenden Richtung so auf den den Pufferabschnitt bedeckenden Hauptteil einwirkt, dass eine erste Kraft, die über den ersten Eingriffabschnitt einen Scherbruch in dem Fenderhauptteil verursacht, und eine zweite Kraft erzeugt wird, die über den zweiten Eingriffabschnitt einen Scherbruch in dem den Pufferabschnitt bedeckenden Hauptteil verursacht, und das Ausmaß der ersten Kraft so eingerichtet ist, dass es größer ist als das Ausmaß der zweiten Kraft.

6. Fenderkonstruktion nach einem der Ansprüche 1 bis 5, wobei
der den Pufferabschnitt bedeckende Hauptteil die gesamte Oberfläche des Pufferabschnitts des Fenderhauptteils bedeckt und ferner ein Schutzelement (61a, 61b) aufweist, das näher an dem Pufferabschnitt zumindest einen Teil des entsprechenden Seitenflächenabschnitts (17a, 17b) des Fenderhauptteils an mindestens einem der Endabschnitte in horizontaler Richtung bedeckt.

7. Fenderkonstruktion nach einem der Ansprüche 1 bis 5, wobei
der den Pufferabschnitt bedeckende Hauptteil die gesamte Oberfläche des Pufferabschnitts des Fenderhauptteils bedeckt und ferner ein Schutzelement aufweist, das näher an dem Pufferabschnitt zumindest einen Teil mindestens eines Seitenflächenabschnitts (27a, 27b) in Längsrichtung des Fenderhauptteils bedeckt.

8. Fenderkonstruktion nach einem der Ansprüche 1 bis 7, wobei
der den Pufferabschnitt bedeckende Hauptteil aus mehreren Abdeckeinheiten (42a bis 42e) besteht.

## Revendications

1. Structure de défense (1) comprenant :
un corps de défense (12), constitué d'un matériau élastique, fixé sur un quai (80) ou similaire, incluant une portion de pare-chocs (13) destinée à amortir un choc lors de l'accostage d'un navire (81) ; et
un corps de recouvrement de portion de pare-chocs (41), constitué d'un matériau élastique, monté séparément sur le corps de défense, recouvrant toute une surface (14) de la portion de pare-chocs du corps de défense ;
**caractérisée en ce que** le corps de recouvrement de portion de pare-chocs inclut une portion de corps de recouvrement (43) recouvrant toute la surface de pare-chocs et une portion de support en forme de feuille (44) prévue de manière intégrale sur la portion de corps de recouvrement et ayant une portion d'extrémité avant fixée de manière détachable au quai ou similaire,
dans laquelle le corps de recouvrement de portion de pare-chocs comporte une portion d'évidement (50) dans la portion arrière (46) de la surface de sorte qu'une partie de la portion de pare-chocs du côté de la surface (14) puisse y être rangé.

2. Structure de défense selon la revendication 1, dans laquelle au moins une partie du corps de recouvrement de portion de pare-chocs est relativement mobile dans une direction s'écartant par rapport à une surface de pare-chocs (22) de la portion de pare-chocs.

3. Structure de défense selon l'une des revendications 1 ou 2, pourvue sur une surface du corps de recouvrement de portion de pare-chocs d'une pluralité de corps en saillie (51) en contact avec la portion de pare-chocs du corps de défense.

4. Structure de défense selon l'une quelconque des revendications 1 à 3, dans laquelle le corps de défense inclut au moins une première portion en prise (55a à 55d) de forme concave ou convexe sur la portion de pare-chocs, tandis que le corps de recouvrement de portion de pare-chocs inclut au moins une seconde portion en prise (56a à 56d) de forme convexe ou concave sur une surface plane en contact avec la portion de pare-chocs du corps de défense, et
la première portion en prise et la seconde portion en prise sont agencées pour venir en prise l'une avec l'autre.

5. Structure de défense selon la revendication 4, dans laquelle une force dans une direction parallèle à la surface plane en contact avec la portion de pare-chocs du corps de défense est appliquée au corps de recouvrement de portion de pare-chocs de manière à générer une première force provoquant une fracture par cisaillement dans le corps de défense à travers la première portion en prise et une seconde force provoquant une fracture par cisaillement dans le corps de recouvrement de portion de pare-chocs à travers la seconde portion en prise, et l'amplitude de la première force est réglée pour être supérieure à l'amplitude de la seconde force.

6. Structure de défense selon l'une quelconque des revendications 1 à 5, dans laquelle le corps de recouvrement de portion de pare-chocs recouvre toute la surface de la portion de pare-chocs du corps de défense, et inclut en outre un élément de protection (61a, 61b) recouvrant au moins une partie, plus proche de la portion de pare-chocs, de la portion de surface latérale correspondante (17a, 17b) du corps de défense sur au moins une des portions d'extrémité dans la direction horizontale.

7. Structure de défense selon l'une quelconque des revendications 1 à 5, dans laquelle le corps de recouvrement de portion de pare-chocs recouvre toute la surface de la portion de pare-chocs du corps de défense, et inclut en outre un élément de protection recouvrant au moins une partie, plus proche de la portion de pare-chocs, d'au moins une portion de surface latérale (27a, 27b) dans la direction longitudinale du corps de défense.

8. Structure de défense selon l'une quelconque des revendications 1 à 7, dans laquelle le corps de recouvrement de portion de pare-chocs est constitué d'une pluralité d'unités de recouvrement (42a à 42e).
